(19) Europäisches Patentamt
European Patent Office
Office européen des brevets

(11) **EP 2 091 138 A1**

(12) **EUROPÄISCHE PATENTANMELDUNG**

(43) Veröffentlichungstag:
**19.08.2009 Patentblatt 2009/34**

(51) Int Cl.:
*H02K 41/03* (2006.01)   *H02K 29/03* (2006.01)
*H02K 21/04* (2006.01)

(21) Anmeldenummer: **08002961.4**

(22) Anmeldetag: **18.02.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **SIEMENS AKTIENGESELLSCHAFT**
**80333 München (DE)**

(72) Erfinder:
• **Jajtic, Zeljko Dr.**
  **80992 München (DE)**
• **Matscheko, Gerhard**
  **82319 Starnberg (DE)**
• **Volmert, Christian**
  **80539 München (DE)**

Bemerkungen:
Geänderte Patentansprüche gemäss Regel 137(2) EPÜ.

(54) **Primärteil und lineare elektrische Maschine mit Kraftwelligkeitsausgleich**

(57) Linearmotor (1) mit reduzierten Rastkräften. Das Primärteil (2) enthält Zahnmodule (4), in die jeweils ein Permanentmagnet (6) eingelassen ist. Um die Zahnmodule (4) sind Zahnspulen (7) gewickelt. Ein Endzahnmodul (11) befindet sich jeweils an den Stirnseiten des Primärteils und hat eine größere Zahnteilungsbreite ($\tau_2$) und einen größeren Luftspalt ($\delta_2 + \delta_1$) zum Sekundärteil (3) als die übrigen Zahnmodule (4).

# FIG 2

EP 2 091 138 A1

**Beschreibung**

Die Erfindung betrifft ein Primärteil einer linearen elektrischen Maschine, wobei das Primärteil ein erstes Mittel zur Erzeugung eines ersten magnetischen Feldes und ein zweites Mittel zur Erzeugung eines zweiten magnetischen Feldes aufweist, wobei erstes Mittel und zweites Mittel derart angeordnet sind, dass eine Überlagerung des ersten magnetischen Feldes mit dem zweiten magnetischen Feld ermöglicht ist. Weiterhin betrifft die Erfindung eine lineare elektrische Maschine mit einem derartigen Primärteil.

Lineare elektrische Maschinen weisen ein Primärteil und ein Sekundärteil auf, wobei Primärteil und Sekundärteil sich gegenüber stehen und durch eine Luftspalt voneinander beabstandet sind. Das Primärteil ist zur Bestromung mit elektrischem Strom vorgesehen.

Es besteht die Möglichkeit, dass sowohl das Primärteil als auch das Sekundärteil aktive Mittel zur Erzeugung magnetischer Felder aufweisen. In einem solchen Fall weist beispielsweise das Primärteil eine bestrombare Wicklung und das Sekundärteil Permanentmagnete auf.

Daneben besteht ferner die Möglichkeit, dass das Primärteil mehrere aktive Mittel zur Erzeugung magnetischer Felder aufweist und das Sekundärteil frei von derartigen Mitteln ist.

Aus der DE 10 2004 045 992 A1 ist eine elektrische Maschine bekannt, wobei das Primärteil alle magnetischen Quellen der elektrischen Maschine aufweist. Das Primärteil weist beispielsweise eine bestrombare Wicklung und Permanentmagnete auf, wohingegen das Sekundärteil lediglich beispielsweise als gezahnte Eisenreaktionsschiene ausgebildet ist.

Im Unterschied zu rotatorisch arbeitenden elektrischen Maschinen besitzen lineare elektrische Maschinen naturgemäß Endbereiche, in welchem der elektromagnetische Teil der Maschine endet. Wird beispielsweise ein Linearmotor in Kurzstatorbauweise, d.h. das Primärteil ist als kürzeres Bauteil gegenüber einem längeren Sekundärteil ausgebildet, ausgeführt, ergeben sich für das Primärteil zwei Endbereiche, die im Einflussbereich des Sekundärteils liegen. Die Enden des Primärteils wechselwirken mit dem Sekundärteil derart, dass dies einen maßgeblichen Einfluss auf die aktive Kraftwelligkeit und die passive Kraftwelligkeit, auch Rastkraft genannt, hat.

Als passive Kraftwelligkeit werden parasitäre Rastkräfte bezeichnet, welche aufgrund der magnetischen Wechselwirkung zwischen Primärteil und Sekundärteil auftreten. Die Folge sind Vibrationen, unruhiger Lauf sowie Schleppfehler bei Bearbeitungsprozessen.

Des Weiteren sind die induzierten Spannungen, d.h. die elektromotorischen Kräfte (EMK), in der Anfangs- und Endspule an den Stirnseiten des Primärteils aufgrund eines fehlenden magnetischen Rückschlusses in der Regel geringer ausgeprägt als in den mittleren Spulen. Dies hat zur Folge, dass die elektrische Maschine keine symmetrisch induzierte Spannung aufweist und sich neben Krafteinbußen eine zusätzliche stromabhängige Kraftwelligkeit, als aktive Kraftwelligkeit bezeichnet, ergibt.

Die Aufgabe der vorliegenden Erfindung ist es, ein Primärteil, welches mehrere aktive Mittel zur Erzeugung magnetischer Felder aufweist, sowie eine lineare elektrische Maschine mit einem derartigen Primärteil weiterzubilden, dass diese eine reduzierte aktive und passive Kraftwelligkeit, d.h. Rastkraft, aufweisen.

Die Aufgabe wird mit den Merkmalen der Patentansprüche 1 und 11 gelöst. Vorteilhafte Weiterbildungen sind den Unteransprüchen zu entnehmen.

Das Primärteil weist ein erstes Mittel zur Erzeugung eines ersten magnetischen Feldes und ein zweites Mittel zur Erzeugung eines zweiten magnetischen Feldes auf, wobei erstes Mittel und zweites Mittel derart angeordnet sind, dass eine Überlagerung des ersten magnetischen Feldes mit dem zweiten magnetischen Feld ermöglicht ist. Das Primärteil ist zur Anordnung mit einem Sekundärteil vorgesehen, wobei Primärteil und Sekundärteil durch einen ersten Luftspalt voneinander beabstandet sind.

Erfindungsgemäß weist das Primärteil an einer und/oder beiden seiner Stirnseiten ein flussführendes Element zur Reduktion der Kraftwelligkeit auf. Insbesondere ist an jeder der beiden Stirnseiten des Primärteils ein flussführendes Element zur Reduktion der Kraftwelligkeit angeordnet.

Das flussführende Element ist so ausgebildet, dass es ein Mittel zur Erzeugung eines magnetischen Feldes aufweist, wobei das Mittel dem ersten oder dem zweiten Mittel zur Erzeugung eines magnetischen Feldes des Primärteils entspricht.

Durch die Anbringung flussführender Elemente ist eine Reduktion der aktiven und besonders der passiven Kraftwelligkeit, d.h. der Rastkraft, möglich. Die induzierten Spannungen in den wicklungstragenden Endzähnen des Primärteils werden angehoben, wobei hierbei Ziel eine möglichst gleichförmige EMK der Wicklung des Primärteils ist.

Vorteilhafterweise ist das erste Mittel zur Erzeugung eines ersten magnetischen Feldes als ein- oder mehrphasige Wicklung ausgebildet. Insbesondere weist das Primärteil eine dreiphasige Wicklung in Form von Zahnspulen zum Anschluss an ein Drehstromnetz auf. Das zweite Mittel zur Erzeugung eines zweiten magnetischen Feldes ist als Permanentmagnetmaterial, insbesondere als ein- oder mehrteilige Permanentmagnete, ausgebildet.

In einer vorteilhaften Ausgestaltung der Erfindung ist das Primärteil mittels einer vorgebbaren Anzahl an Zahnmodulen ausbildbar, wobei jedes Zahnmodul zumindest einen Permanentmagneten und eine Zahnspule aufweist. Mittels einzelner Zahnmodule ist ein Primärteil je nach gewünschter Bauart und Länge modular aufbaubar. Die gewünschte Anzahl an Zahnmodulen wird entsprechend zusammengefügt, beispielsweise mittels Klammern. Jedes Zahnmodul ist insbesondere mittels Elektroblechen als Blechpaket zur Reduktion von Wirbelströmen im Primärteil ausgebildet.

Das flussführende Element zur Reduktion der Kraftwelligkeit an den Stirnseiten des Primärteils ist als Endzahnmodul ausgebildet und weist zumindest einen Permanentmagneten auf. Das Endzahnmodul entspricht in seiner Bauart im Wesentlichen den übrigen Zahnmodulen des Primärteils. Es unterscheidet sich dadurch, dass es nicht wicklungstragend ist, d.h. es weist keine Zahnspule auf.

Die Erfindung löst die Aufgabe durch zwei zusätzliche Zahnmodule an beiden Enden des Primärteils, die Endzahnmodule. Diese Endzahnmodule werden als Fortsetzung des aktiven Primärteilbereichs an beiden Enden angeordnet.

In einer ersten Ausgestaltung der Erfindung ist das flussführende Element durch einen zweiten Luftspalt zusätzlich zum ersten Luftspalt vom Sekundärteil beabstandet. Zwischen Sekundärteil und flussführendem Element besteht somit ein größerer Luftspalt, d. h. Abstand, als zwischen Primärteil und Sekundärteil.

Dadurch, dass das zwischen Sekundärteil und flussführendem Element ein größerer Luftspalt ist, d.h. Abstand, als zwischen übrigem Primärteil und Sekundärteil besteht, ist entsprechend der Permanentmagnet des Endzahnmoduls anders ausgebildet, insbesondere weist er ein kleineres Volumen auf.

Die Zahnmodule des Primärteils weisen eine erste Zahnteilung zueinander auf. In einer weiteren Ausgestaltung für den Ausgleich der Kraftwelligkeit ist ein Endzahnmodul durch eine vorgebbare zweite Zahnteilung von einem Zahnmodul beabstandet, wobei die zweite Zahnteilung ungleich der ersten Zahnteilung ist. Vorzugsweise ist die zweite Zahnteilung jedoch größer als die erste Zahnteilung ausgebildet. Das bedeutet, dass das Primärteil zwei unterschiedliche Zahnteilungen aufweist. Das Endzahnmodul weist zu seinem benachbarten Zahnmodul einen anderen Abstand auf als die übrigen Zahnmodule zueinander.

Eine weitere Möglichkeit zum Ausgleich insbesondere der Rastkräfte ist eine Geometrie des Endzahnmoduls, welche sich von der Geometrie eines übrigen Zahnmoduls unterscheidet. Insbesondere sind die dem Luftspalt zugewandten Flächen und/oder Ecken des Endzahnmoduls mit einem vorgebbaren Radius abgerundet.

Für eine effektive Reduzierung der Kraftwelligkeit, insbesondere der Rastkraft, sind erfindungsgemäß folgende Alternativen gegeben, wobei jede Alternative einzeln oder beliebige Kombinationen der Alternativen untereinander realisierbar sind:

- Das flussführende Element weist einen zusätzlichen Luftspalt $\delta_2$ zum normalen Luftspalt $\delta_1$ zwischen Primärteil und Sekundärteil auf. Vorteilhafterweise wird der Luftspalt $\delta_2$ so gewählt, damit folgendes gilt:

$$0 \leq \delta_2 \leq 5\delta_1.$$

- Das flussführende Element weist eine geänderte Zahnteilung $\tau_2$ gegenüber der Zahnteilung $\tau_1$ des Primärteils auf. Vorteilhafterweise gilt für die geänderte Zahnteilung

$$\tau_2: \ 0,6\tau_1 \leq \tau_2 \leq 2\tau_1.$$

- Das flussführende Element ist in seiner geometrischen Form modifiziert ausgebildet.

Durch eine optimale Anpassung der genannten Parameter lässt sich eine starke Reduzierung der Rastkräfte um den Faktor von ca. 2-3 erreichen.

Die Erfindung bezieht sich insbesondere auf mehrphasige Linearmotoren mit Permanentmagneterregung im Primärteil und einem passiven Sekundärteil, beispielsweise in Form einer gezahnten Eisenstruktur. Wie bei allen Linearmotoren bzw. linearen elektrischen Maschinen entsteht durch elektromagnetische Diskontinuitäten an beiden Primärteilenden eine Rastkraft, die den Motorbetrieb stört.

Die erfindungsgemäße lineare elektrische Maschine weist ein erfindungsgemäßes Primärteil und ein Sekundärteil auf, welches frei von Mitteln zu Erzeugung magnetischer Felder ist. Vorteilhafterweise ist das Sekundärteil als gezahntes Eisenreaktionsteil mit mehreren Zähnen und Nuten ausgebildet. Das Sekundärteil ist vorteilhafterweise geblecht, d.h. mittels einer Vielzahl an einzelnen Elektroblechen, ausgebildet, um Wirbelstromverluste zu vermeiden. Alternativ könnte das Sekundärteil jedoch auch als massive, gezahnte Eisenreaktionsschiene ausgebildet sein. Die lineare elektrische Maschine ist insbesondere als Synchronlinearmotor ausgebildet.

Ein derartiger Aufbau einer elektrischen Maschine hat den Vorteil, dass das Sekundärteil der elektrischen Maschine keine aktiven Mittel zur Erzeugung eines magnetischen Feldes aufweist. Das Sekundärteil weist lediglich Mittel zur Führung magnetischer Felder auf und ist daher einfach und preisgünstig zu fertigen.

Durch die Reduzierung der Rastkraft mittels der flussführenden Elemente ergeben sich mehrere Vorteile:

- verbesserte Eigenschaften der elektrischen Maschine, insbesondere eines Linearmotors, im Betrieb, wie beispielsweise besserer Gleichlauf, höhere Nennkraft, höhere Antriebsdynamik und keine "Geisterbewegung" des abgeschalteten Motors durch Rastkraft;
- verbesserte Eigenschaften in einem Antriebssystem (z.B. Siemens Sinamics-Antriebssystem), wie beispielsweise genauere Pollageidentifikation durch reduzierte elektromagnetische Unsymmetrien (Endeffekte) des Linearmotors.

In der nachfolgenden Beschreibung werden weitere Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:

FIG 1    eine lineare elektrische Maschine gemäß Stand der Technik,

FIG 2    eine erfindungsgemäße lineare elektrische Maschine in einer ersten Ausgestaltung,

FIG 3    eine erfindungsgemäße lineare elektrische Maschine in einer zweiten Ausgestaltung,

FIG 4    eine Darstellung des Rastkraftverlaufs bei verschiedenen linearen elektrischen Maschinen.

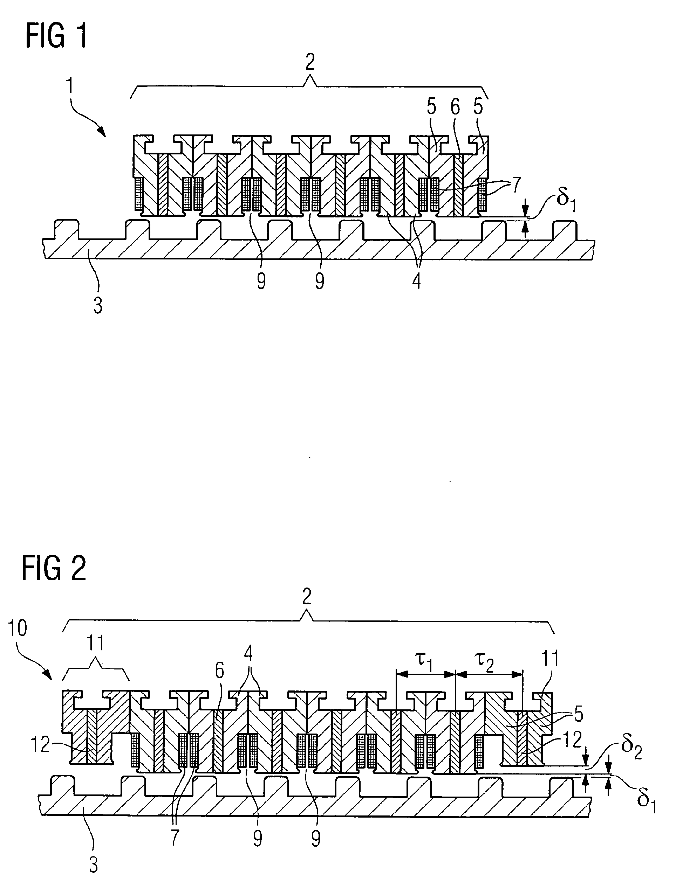

FIG 1 zeigt eine lineare elektrische Maschine 1 gemäß Stand der Technik ohne flussführende Elemente zur Reduktion der Kraftwelligkeit. Die lineare elektrische Maschine 1 umfasst ein Primärteil 2 und ein Sekundärteil 3. Das Primärteil 2 ist mittels Zahnmodulen 4 aufgebaut. Gemäß FIG 1 ist das Primärteil aus sechs Zahnmodulen 4 aufgebaut, wobei jedes Zahnmodul 4 mittels eines Eisen-Blechpakets 5 realisiert ist.

Primärteil 2 und Sekundärteil 3 sind durch einen ersten Luftspalt $\delta_1$ voneinander beabstandet.

Jedes Zahnmodul 4 weist einen Permanentmagneten 6 auf, welcher in das Zahnmodul 4 integriert ist. Die Permanentmagnete 6 könnten jedoch auch beispielsweise außerhalb des Zahnmoduls 4 am Zahnmodul 4 auf der dem Luftspalt $\delta_1$ zugewandten Seite des Primärteils 2 angeordnet sein.

Weiterhin weist jedes Zahnmodul 4 eine Zahnspule 7 auf, wobei die sechs Zahnspulen 7 die Wicklung des Primärteils 2 bilden. Die Wicklung ist dreiphasig mit den Phasen u, v, w ausgebildet, so dass zu jeder Phase u, v, w zwei Zahnspulen 7 ausgebildet sind. Die Zahnspulen 7 liegen in den Nuten 9 des Primärteils 2.

FIG 2 zeigt eine lineare elektrische Maschine 10 in einer ersten erfindungsgemäßen Ausgestaltung. Das Primärteil 2 weist neben den sechs Zahnmodulen 4 die zusätzlichen zwei Endzahnmodule 11 auf, wobei jeweils an einer Stirnseite des Primärteils 2 ein Endzahnmodul 11 angeordnet ist.

Jedes Endzahnmodul 11 ist durch einen zweiten Luftspalt $\delta_2$ zusätzlich zum ersten Luftspalt $\delta_1$ zum Sekundärteil 3 beabstandet, so dass zwischen Sekundärteil 3 und Endzahnmodul 11 ein vergrößerter Luftspalt $\delta_1 + \delta_2$ besteht als zwischen dem übrigen Primärteil 2 und Sekundärteil 3.

Aufgrund des größeren Luftspalts $\delta_1 + \delta_2$ zwischen Endzahnmodul 11 und Sekundärteil 3 ist der Permanentmagnet 12 des Endzahnmoduls 11 entsprechend kleiner, d.h. kürzer, ausgebildet. Die Endzahnmodule 11 weisen keine Zahnspulen auf. Im Übrigen sind die Zahnmodule 4 und die Endzahnmodule 11 im Wesentlichen baugleich ausgeführt.

Die Endzahnmodule 11 weisen zu den Zahnmodulen 4 eine andere, vorzugweise vergrößerte, Zahnteilung $\tau_2$ als die Zahnmodule 4 untereinander auf. Die erste Zahnteilung $\tau_1$ ist die maßgebliche Zahnteilung des Primärteils 2, jedoch weisen die Endzahnmodule 11 einen anderen Abstand $\tau_2$ zu ihren benachbarten Zahnmodulen 4 auf.

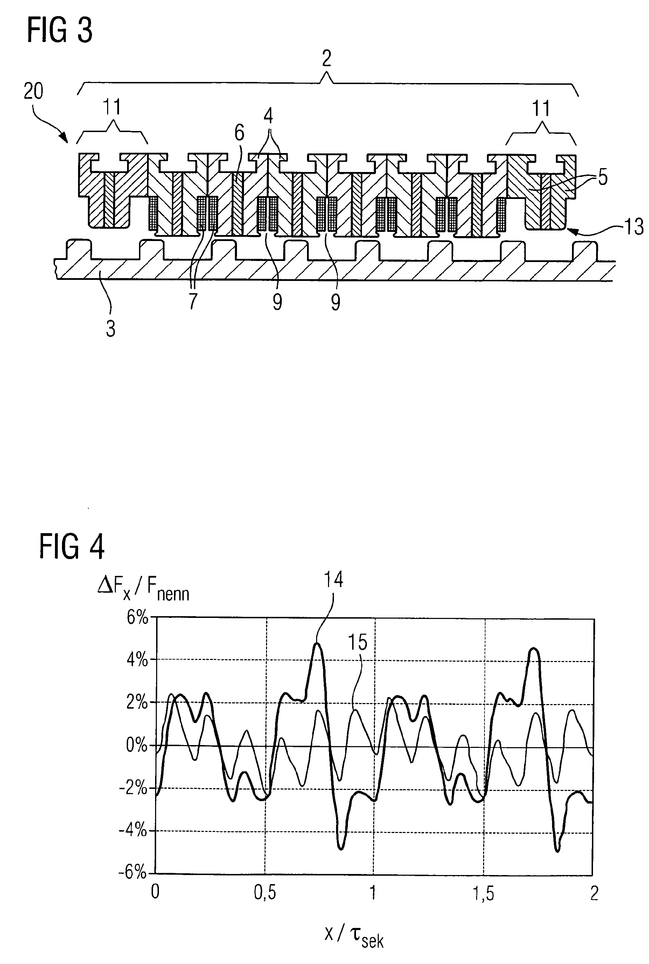

FIG 3 zeigt eine lineare elektrische Maschine 20 in einer zweiten erfindungsgemäßen Ausgestaltung. Das Primärteil 2 weist neben den sechs Zahnmodulen 4 die zusätzlichen zwei Endzahnmodule 11 auf, wobei jeweils an einer Stirnseite des Primärteils 2 ein Endzahnmodul 11 angeordnet ist.

Die lineare elektrische Maschine 20 entspricht im Wesentlichen der Ausführungsform gemäß FIG 2, jedoch weist jedes Endzahnmodul 11 eine leicht modifizierte Geometrie auf. Insbesondere weisen die Endzahnmodule 11 abgerundete Ecken 13 auf.

FIG 4 zeigt eine Darstellung des Rastkraftverlaufs verschiedener elektrischer Maschinen. Mit dem Bezugszeichen 14 ist die Amplitude der Rastkraft einer elektrischen Maschine 1 gemäß FIG 1 dargestellt, d. h. einer Maschine ohne flussführende Elemente zur Reduktion der Kraftwelligkeit. Mit dem Bezugszeichen 15 ist dagegen die Amplitude der Rastkraft einer elektrischen Maschine 10 gemäß FIG 2 mit Endzahnmodulen 11 dargestellt. In FIG 4 ist gut zu erkennen, dass nur geringe Rastkräfte auftreten, wenn entsprechende Elemente zur Reduktion der Rastkraft angeordnet sind.

**Patentansprüche**

1.  Primärteil (2) einer linearen elektrischen Maschine (1,10, 20), wobei

   - das Primärteil (2) ein erstes Mittel zur Erzeugung eines ersten magnetischen Feldes aufweist,
   - das Primärteil (2) ein zweites Mittel zur Erzeugung eines zweiten magnetischen Feldes aufweist,
   - erstes Mittel und zweites Mittel derart angeordnet sind, dass eine Überlagerung des ersten magnetischen Feldes mit dem zweiten magnetischen Feld ermöglicht ist,
   - das Primärteil (2) zur Anordnung mit einem Sekundärteil (3) vorgesehen ist, wobei Primärteil (2) und Sekundärteil (3) durch einen ersten Luftspalt ($\delta_1$) voneinander beabstandet sind,
   - an einer und/oder beiden Stirnseiten des Primärteils (2) ein flussführendes Element zur Reduktion der Kraftwelligkeit angeordnet ist.

2.  Primärteil (2) nach Anspruch 1, **dadurch**

**gekennzeichnet , dass** das erste Mittel zur Erzeugung eines ersten magnetischen Feldes als ein- oder mehrphasige Wicklung ausgebildet ist.

3. Primärteil (2) nach Anspruch 1 oder 2, **dadurch gekennzeichnet , dass** das zweite Mittel zur Erzeugung eines zweiten magnetischen Feldes als Permanentmagnetmaterial ausgebildet ist.

4. Primärteil (2) nach einem der vorhergehenden Ansprüche, **dadurch gekennzeichnet, dass** das flussführende Element zur Reduktion der Kraftwelligkeit das erste Mittel oder das zweite Mittel zur Erzeugung eines magnetischen Feldes aufweist.

5. Primärteil (2) nach einem der vorhergehenden Ansprüche, **dadurch gekennzeichnet , dass** das Primärteil (2) mittels einer vorgebbaren Anzahl an Zahnmodulen (4) ausbildbar ist, wobei jedes Zahnmodul (4) zumindest einen Permanentmagneten (6) und eine Zahnspule (7) aufweist.

6. Primärteil (2) nach einem der vorhergehenden Ansprüche, **dadurch gekennzeichnet, dass** das flussführende Element zur Reduktion der Kraftwelligkeit als Endzahnmodul (11) ausgebildet ist und zumindest einen Permanentmagneten (12, 13) aufweist.

7. Primärteil (2) nach einem der vorhergehenden Ansprüche, **dadurch gekennzeichnet, dass** das flussführende Element zur Reduktion der Kraftwelligkeit durch einen zweiten Luftspalt ($\delta_2$) zusätzlich zum ersten Luftspalt ($\delta_1$) vom Sekundärteil (3) beabstandet ist.

8. Primärteil (2) nach Anspruch 5, 6 oder 7, **dadurch gekennzeichnet , dass** die Zahnmodule (4) zueinander eine erste Zahnteilung ($\tau_1$) aufweisen, wobei das Endzahnmodul (11) durch eine vorgebbare zweite Zahnteilung ($\tau_2$) von einem Zahnmodul (4) beabstandet ist, wobei $\tau_1 \neq \tau_2$, insbesondere $\tau_1 < \tau_2$, ist.

9. Primärteil (2) nach einem der Ansprüche 5 bis 8, **dadurch gekennzeichnet, dass** das Endzahnmodul (11) gegenüber den Zahnmodulen (4) eine sich unterscheidende geometrische Form aufweist.

10. Primärteil (2) nach Anspruch 9, **dadurch gekennzeichnet , dass** die dem Luftspalt ($\delta_1$, $\delta_2$) zugewandte Fläche und/oder Ecken des Endzahnmoduls (11) mit einem vorgebbaren Radius abgerundet sind.

11. Lineare elektrische Maschine (10,20) mit einem Primärteil (2) , welches nach einem oder mehreren der Ansprüche 1 bis 10 ausgebildet ist und einem Sekundärteil (3), welches frei von Mitteln zu Erzeugung magnetischer Felder ist.

12. Lineare elektrische Maschine (10,20) nach Anspruch 11, **dadurch gekennzeichnet , dass** das Sekundärteil (3) eine gezahnte Eisenstruktur mit mehreren Zähnen und Nuten aufweist.

13. Lineare elektrische Maschine (10,20) nach Anspruch 11 oder 12, **dadurch gekennzeichnet, dass** die Maschine (10,20) als Synchronlinearmotor ausgebildet ist.

**Geänderte Patentansprüche gemäss Regel 137(2) EPÜ.**

1. Primärteil (2) einer linearen elektrischen Maschine (1,10, 20), wobei

- das Primärteil (2) ein erstes Mittel zur Erzeugung eines ersten magnetischen Feldes aufweist,
- das Primärteil (2) ein zweites Mittel zur Erzeugung eines zweiten magnetischen Feldes aufweist,
- erstes Mittel und zweites Mittel derart angeordnet sind, dass eine Überlagerung des ersten magnetischen Feldes mit dem zweiten magnetischen Feld ermöglicht ist,
- das Primärteil (2) zur Anordnung mit einem Sekundärteil (3) vorgesehen ist, wobei Primärteil (2) und Sekundärteil (3) durch einen ersten Luftspalt ($\delta_1$) voneinander beabstandet sind, das zweite Mittel zur Erzeugung eines zweiten magnetischen Feldes als Permanentmagnetmaterial ausgebildet ist,

**dadurch gekennzeichnet , dass**

- an einer und/oder beiden Stirnseiten des Primärteils (2) ein flussführendes Element zur Reduktion der Kraftwelligkeit angeordnet ist, und
- das flussführende Element zur Reduktion der Kraftwelligkeit das zweite Mittel zur Erzeugung eines magnetischen Feldes aufweist.

2. Primärteil (2) nach Anspruch 1, **dadurch gekennzeichnet, dass** das erste Mittel zur Erzeugung eines ersten magnetischen Feldes als ein- oder mehrphasige Wicklung ausgebildet ist.

3. Primärteil (2) nach einem der vorhergehenden Ansprüche,
**dadurch gekennzeichnet, dass** das Primärteil (2) mittels einer vorgebbaren Anzahl an Zahnmodulen (4) ausbildbar ist, wobei jedes Zahnmodul (4) zumindest einen Permanentmagneten (6) und eine Zahnspule (7) aufweist.

**4.** Primärteil (2) nach einem der vorhergehenden Ansprüche,
**dadurch gekennzeichnet, dass** das flussführende Element zur Reduktion der Kraftwelligkeit als Endzahnmodul (11) ausgebildet ist und zumindest einen Permanentmagneten (12, 13) aufweist.

**5.** Primärteil (2) nach einem der vorhergehenden Ansprüche,
**dadurch gekennzeichnet , dass** das flussführende Element zur Reduktion der Kraftwelligkeit durch einen zweiten Luftspalt ($\delta_2$) zusätzlich zum ersten Luftspalt ($\delta_1$) vom Sekundärteil (3) beabstandet ist.

**6.** Primärteil (2) nach Anspruch 3, 4 oder 5, **dadurch gekennzeichnet, dass** die Zahnmodule (4) zueinander eine erste Zahnteilung ($\tau_1$) aufweisen, wobei das Endzahnmodul (11) durch eine vorgebbare zweite Zahnteilung $\tau_2$) von einem Zahnmodul (4) beabstandet ist, wobei $\tau_1 \neq \tau_2$, insbesondere $\tau_1 < \tau_2$, ist.

**7.** Primärteil (2) nach einem der Ansprüche 3 bis 6, **dadurch gekennzeichnet, dass** das Endzahnmodul (11) gegenüber den Zahnmodulen (4) eine sich unterscheidende geometrische Form aufweist.

**8.** Primärteil (2) nach Anspruch 7, **dadurch gekennzeichnet, dass** die dem Luftspalt ($\delta_1$, $\delta_2$) zugewandte Fläche und/oder Ecken des Endzahnmoduls (11) mit einem vorgebbaren Radius abgerundet sind.

**9.** Lineare elektrische Maschine (10,20) mit einem Primärteil (2) , welches nach einem oder mehreren der Ansprüche 1 bis 8 ausgebildet ist und einem Sekundärteil (3), welches frei von Mitteln zu Erzeugung magnetischer Felder ist.

**10.** Lineare elektrische Maschine (10,20) nach Anspruch 9, **dadurch gekennzeichnet, dass** das Sekundärteil (3) eine gezahnte Eisenstruktur mit mehreren Zähnen und Nuten aufweist.

**11.** Lineare elektrische Maschine (10,20) nach Anspruch 9 oder 12, **dadurch gekennzeichnet, dass** die Maschine (10,20) als Synchronlinearmotor ausgebildet ist.

## FIG 1

## FIG 2

## FIG 3

## FIG 4

EP 2 091 138 A1

**Europäisches Patentamt**

**EUROPÄISCHER RECHERCHENBERICHT**

Nummer der Anmeldung

EP 08 00 2961

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,Y | DE 10 2004 045992 A1 (SIEMENS AG [DE]) 6. April 2006 (2006-04-06) * Absätze [0017], [0018], [0084], [0086]; Abbildung 12 * ----- | 1-13 | INV. H02K41/03 H02K29/03 H02K21/04 |
| Y | JP 2005 168243 A (YASKAWA ELECTRIC CORP) 23. Juni 2005 (2005-06-23) * Zusammenfassung; Abbildung 1 * ----- | 1-9, 11-13 | |
| Y | DE 10 2005 004380 A1 (SIEMENS AG [DE]) 10. August 2006 (2006-08-10) | 10 | |
| A | * das ganze Dokument * ----- | 1-9, 11-13 | |
| Y | US 2003/098620 A1 (OHTO MOTOMICHI [JP] ET AL) 29. Mai 2003 (2003-05-29) | 6,8-10 | |
| A | * Absätze [0001], [0032], [0037], [0069], [0070], [0076]; Abbildung 4 * ----- | 1-5,7, 11-13 | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| München | 29. Juli 2008 | Strasser, Thorsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

9

**ANHANG ZUM EUROPÄISCHEN RECHERCHENBERICHT
ÜBER DIE EUROPÄISCHE PATENTANMELDUNG NR.**                    EP 08 00 2961

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-2008

| Im Recherchenbericht angeführtes Patentdokument | Datum der Veröffentlichung | Mitglied(er) der Patentfamilie | | Datum der Veröffentlichung |
|---|---|---|---|---|
| DE 102004045992 A1 | 06-04-2006 | CN | 101023570 A | 22-08-2007 |
| | | CN | 101027827 A | 29-08-2007 |
| | | WO | 2006032255 A1 | 30-03-2006 |
| | | EP | 1792385 A1 | 06-06-2007 |
| | | EP | 1792380 A1 | 06-06-2007 |
| | | WO | 2006032638 A1 | 30-03-2006 |
| | | JP | 2008514168 T | 01-05-2008 |
| | | JP | 2008514175 T | 01-05-2008 |
| | | US | 2007222304 A1 | 27-09-2007 |
| | | US | 2007236090 A1 | 11-10-2007 |
| JP 2005168243 A | 23-06-2005 | KEINE | | |
| DE 102005004380 A1 | 10-08-2006 | WO | 2006082134 A1 | 10-08-2006 |
| US 2003098620 A1 | 29-05-2003 | CN | 1430805 A | 16-07-2003 |
| | | EP | 1283586 A1 | 12-02-2003 |
| | | WO | 0180408 A1 | 25-10-2001 |
| | | JP | 4103066 B2 | 18-06-2008 |
| | | TW | 506182 B | 11-10-2002 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004045992 A1